# EUROPEAN PATENT SPECIFICATION

(11) **EP 2 073 400 B1**
(45) Date of publication and mention of the grant of the patent: **28.12.2011**
(21) Application number: 08171971.8
(22) Date of filing: 17.12.2008
(51) Int. Cl.: H04B 7/185

(54) **Satelite television system, signals and coder therefore**
Satellitenfernsehsystem, Signale und Codierer dafür
Système de télévision satellite, signaux et codeur associé

(30) Priority: 17.12.2007 GB 0724531
(43) Date of publication of application: 24.06.2009
(73) Proprietor: Newtec cy., 9100 Sint-Niklaas (BE)
(72) Inventor: Breynaert, Dirk, B-9100, Sint-Niklaas (BE); Delaruelle, Daniel, B-9100, Sint-Niklaas (BE)
(74) Representative: Bird, William Edward

(56) References cited:
- TOSKALA A ET AL: "WCDMA for UMTS: Radio Access for Third Generation Mobile Communications, High-speed Downlink Packet Access" WCDMA FOR UMTS: RADIO ACCESS FOR THIRD GENERATION MOBILE COMMUNICATIONS, JOHN WILEY & SONS, 1 September 2004 (2004-09-01), pages 307-345, XP002513999 ISBN: 978-0-470-87096-9
- "Digital Video Broadcasting (DVB); Second generation framing structure, channel coding and modulation systems for Broadcasting, Interactive Services, News Gathering and other broadband satellite applications European Broadcasting Union Union Européenne de Radio-Télévision EBUÜER; ETSI EN 302 307" ETSI STANDARDS, LIS, SOPHIA ANTIPOLIS CEDEX, FRANCE, vol. BC, no. V1.1.2, 1 June 2006 (2006-06-01), XP014034070 ISSN: 0000-0001
- "3GPP TS 36.213 V8.0.0 Physical Layer Procedures" 3GPP TECHNICAL SPECIFICATION, SOPHIA ANTIPOLIS, FRANCE, 27 September 2007 (2007-09-27), pages 1-13, XP002521804 [retrieved on 2007-09-01]
- "3GPP TS 36.212 V8.0.0, Multiplexing and channel coding" 3GPP TECHNICAL SPECIFICATION, SOPHIA ANTIPOLIS, FRANCE, 1 May 2007 (2007-05-01), pages 1-15, XP002519790
- "3GPP TS 36.211 V8.0.0 Physical channels and modulation" 3GPP TECHNICAL SPECIFICATION, SOPHIA ANTIPOLIS, FRANCE, 27 September 2007 (2007-09-27), pages 1-50, XP002522316

## Description

### Field of the Invention

The present invention relates to communication systems, and more particularly to methods and apparatuses for increasing baud rate in satellite systems.

### Description of the Related Art

The DVB-S2 standard has a high physical-layer performance. This is achieved through the use of very powerful coding, combined with provisions for high-order modulation schemes that are optimised for use on nonlinear satellite channels. The DVB-S2 physical layer makes use of a powerful channel coding technique known as LDPC (Low Density Parity Check) coding, in combination with a small conventional block code (BCH). An LDPC code is a turbo code. A BCH code is a multilevel, cyclic, error-correcting, variable-length digital code used to correct multiple random error patterns. BCH codes may also be used with multilevel phase-shift keying whenever the number of levels is a prime number or a power of a prime number. The BCH code is included in DVB-S2 to mitigate the "flaring" of the error performance that is inherent in all high performance codes, including LDPC. DVB-S2 offers a range of modulation schemes, starting with conventional QPSK and 8PSK. For higher spectral efficiency in applications that allow it, the standard also includes 16-ary and 32-ary schemes. A DVB-S2 carrier is a continuous stream of channel symbols, transmitted at a constant rate. The carrier is organized in "frames". Each frame corresponds to one code word of the LDPC code, and contains between 3072 and 58192 information bits, depending on code rate and on which of the two frame size options (known as "normal" and "short") has been selected. Each frame also contains a header, which identifies the modulation and coding used. The modulation and coding can therefore be varied on a frame-by-frame basis. Transmission modes that make use of this option are known as "VCM" (Variable Coding and Modulation") and "ACM" (Adaptive Coding and Modulation"). VCM and ACM differ mainly in their intended use; they are virtually identical in terms of what is actually transmitted.

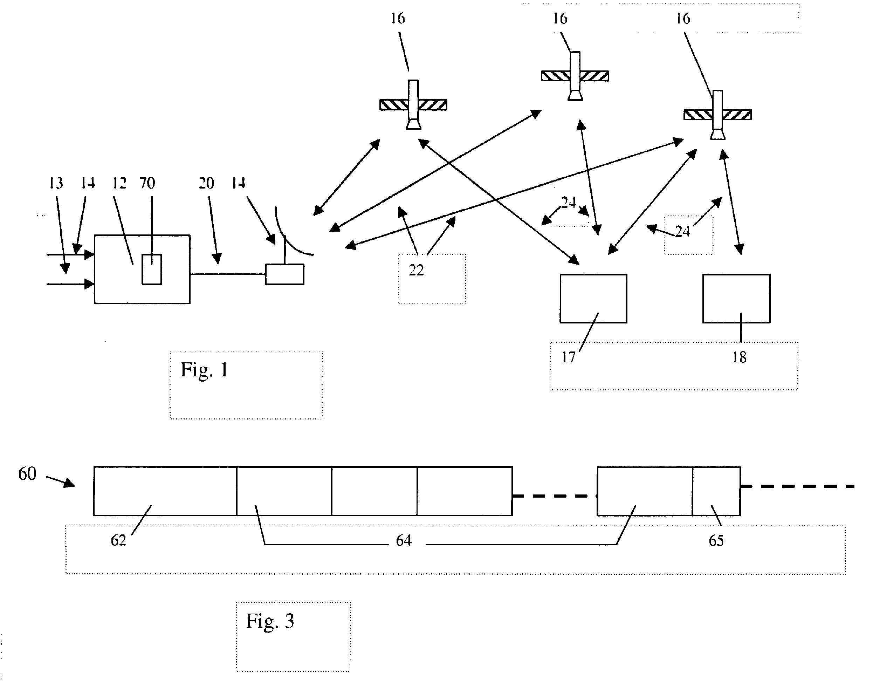

Fig. 1 shows a typical satellite television broadcasting system 10, which transmits and receives audio, video, and data signals via satellite, e.g. in accordance with the DVB-S2 standard. Television broadcasting system 10 includes broadcasting station 12, uplink dish 14, one or more satellites 16, and one or more ground user terminals 17, 18. Broadcasting station 12 includes a plurality of inputs 11 for receiving various signals, such as analog television signals, digital television signals, video signals, programming signals and computer generated signals. Broadcasting station 12 also includes a plurality of timing inputs 13, which provide electronic schedule information about the timing and content of various television channels, such as that found in television schedules. Broadcasting station 12 converts the data from timing inputs 13 into program guide data. Program guide data may also be manually entered at the broadcasting station 12.

For the Forward Link, the broadcasting station 12 receives and processes the various input signals received on inputs 11 and timing inputs 13, encodes these in an encoder/modulator 70 and converts these into standard signals, combines the standard signals into a single output data stream 20, and continuously sends output data stream 20 to uplink dish 14. Output data stream 20 is a digital data stream that is typically compressed using MPEG2 encoding, although other compression schemes may be used.

The digital data in output data stream 20 are divided into a plurality of packets, with each such packet marked with a service channel identification (SCID) number. The SCIDs are later used by a customer receiver to identify the packets that correspond to each television channel. Error correction data is also included in output data stream 20.

Output data stream 20 is a multiplexed signal that is modulated by broadcasting station 12 using standard frequency and polarization modulation techniques. Output data stream 20 preferably includes several frequency bands, with each frequency band being either left polarized or right polarized. Alternatively, vertical and horizontal polarizations may be used.

Uplink dish 14 continuously receives output data stream 20 from broadcasting station 12, amplifies the received signal and transmits the signal 22 to one or more of the satellites 16 on the satelite on the uplink.

Satellites 16 each include a plurality of transponders that receive the signals 22, amplify the received signals 22, frequency shift the received signals 22 to lower frequency bands, and then transmit the amplified, frequency shifted signals 24 back to user terminals 17,18 on a downlink.

The user terminals 17, 18 receive and process the signals 24 and optionally transmit them further to other user equipment. The return link goes in the opposite direction.

User terminals 17, 18 receive and decode audio, video and data signals and hence include a decoder. The user terminal 17, 18 can be an Integrated Receiver Decoder (IRD), which is usually resident in a home or multi-dwelling unit, for reception of satellite broadcast television signals. The dish of the user terminal can be an Outdoor Unit (ODU), which is usually a smaller dish antenna mounted on a home or multi-dwelling unit. However, the user terminal dish can also be a larger ground-mounted antenna dish if desired.

Presently throughput, e.g. average bit rate or equivalent baud rate through the user terminal is being limited by the channel decoder capacity. There is a need in the art to reduce the average bit rate in the channel decoder to thereby allow an increase in the baud rate of the system.

TOSKALA A ET AL: "WCDMA for UMTS: Radio Access for Third Generation Mobile Communications, High-speed Downlink Packet Access" WCDMA FOR UMTS: RADIO ACCESS FOR THIRD GENERATION MOBILE COMMUNICATIONS, JOHN WILEY & SONS, 1 September 2004 (2004-09-01), pages 307-345, ISBN: 978-0-470-87096-9 discloses a high-speed packet access for WCDMA. A base station transmits a High-Speed Shared Control Channel (HS-SCCH) and a High-Speed Downlink Shared Channel (HS-DSCH). The HS-SCCH carries physical layer control information to enable decoding of data sent on the HS-DSCH. The HS-SCCH employs terminal-specific masking to allow the terminal to decide whether the detected control channel is actually intended for the particular terminal and hence describes terminal-specific addressing.

Digital Video Broadcasting (DVB); Second generation framing structure, channel coding and modulation systems for Broadcasting, Interactive Services. News Gathering and other broadband satellite applications, European Broadcasting Union; ETSI EN 302 307 ETSI STANDARDS, LIS, SOPHIA ANTIPOLIS CEDEX, FRANCE, vol. BC, no. V1.1.2, 1 June 2006 (2006-06~01), discloses the frame structure for DVB modulation systems.

### SUMMARY OF THE INVENTION

The present invention discloses methods and apparatuses for operating satellite systems at a high baud rate. In high speed applications, the channel decoder is the limiting factor for the maximum average bit rate or baud rate in the FW link. In applications, however, where not all frames need to be processed at all destinations, quite some channel decoder time can be saved, if the receiver 'knows' in advance (i.e. before decoding) the destination of a frame and hence can simply ignore the unwanted frames thus reducing the average bit rate through the decoder. By not decoding unwanted frames the effective bit rate through the channel decoder is reduced thus allowing operation of a system with a higher baud rate.

A method in accordance with the present invention comprises:
generating a signal comprising a header and a payload portion, the header comprising:
   a frame tag field for frame tagging to define one of a plurality of destination groups and
   a modcode field for defining one of a plurality of modulation codes and optionally a

type field for defining whether pilot signals are used or not, and transmitting the signal from a ground antenna to a satellite.

A receiving apparatus in accordance with the present invention comprises a receiver having a demodulator and a decoder, the receiver being adapted to receive a signal, the receiver being adapted to read a header of the signal and to identify three fields: a frame tag field for frame tagging to define one of a plurality of destination groups, a modcode field for defining one of a plurality of modulation codes and optionally a type field for defining whether pilot signals are used or not, the receiver being further adapted to only decode the signal dependent upon the determined destination group.

The present invention also includes a method to receive a signal, the method comprising:
reading a header of the signal and identifying:
   a frame tag field for frame tagging to define one of a plurality of destination groups, and
   a modcode field for defining one of a plurality of modulation codes, and
   only decoding the signal dependent upon the determined destination group.

The present invention also includes a software or computer program product comprising code segments that when executed on a suitable processing engine implement a method of transmitting signals in a satellite telecommunications system, the code segments implementing when executed:
generating a signal comprising a header and a payload portion, the header comprising:
   a frame tag field for frame tagging to define one of a plurality of destination groups, and
   a modcode field for defining one of a plurality of modulation codes.

The present invention also includes software for a receiver. Accordingly, the present invention also includes a software or computer program product comprising code segments that when executed on a suitable processing engine implement a method of receding signals in a satellite telecommunications system, the code segments implementing when executed:
receiving a signal comprising a header and a payload portion, the header comprising:
   a frame tag field for frame tagging to define one of a plurality of destination groups, and
   a modcode field for defining one of a plurality of modulation codes, and only decoding
   the signal dependent upon the determined destination group.

An encoding apparatus in accordance with the present invention has an input for source signals, an encoder and a modulator, the encoding apparatus being adapted to generate a header of a transmit signal having three fields: a frame tag field for frame tagging to define one of a plurality of destination groups, a modcode field for defining one of a plurality of modulation codes and optionally a type field for defining whether pilot signals are used or not, the transmit signal being supplied to the modulator for modulation before transmission.

The DVB-S2 standard defines 7 symbols that are assigned to 2 fields:
- MODCOD: 5 bits (field 1)
- TYPE (field 2), consisting of 2 subfields:
   FECFRAME LENGTH: 1 bit (subfield 2.1)
   PILOTS ON/OFF: 1 bit (subfield 2.2)

A satellite broadcasting system in accordance with embodiments of the present invention is defined by a signal having these two fields configured in the following way: a frame tag field for frame tagging to define one of a plurality of destination groups, a modcode field for defining one of a plurality of modulation codes and optionally a type field for defining whether pilot signals are used or not. An aspect of this invention is to sacrifice one or more symbols (i.e. bits in this context) for destination group tagging. One preferred embodiment is the case where 2 bits are provided for destination group tagging (i.e. I bit taken from MODCOD, 1 bit from TYPE: FECFRAME LENGTH). This uses 2 bits to allow for distinguishing between 4 different destination groups.

However, other possibilities (1 bit for 2 destination groups, or 3 bits for 8 destination groups, ...) where each bit can be taken from any of the 3 fields/subfields, are included within the scope of the invention.

Still other aspects, features, and advantages of the present invention will be apparent from the following detailed description and attached drawings. The detailed description and attached drawings merely illustrate particular embodiments and implementations of the present invention. Accordingly, the drawings and description are to be regarded as illustrative in nature.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 shows a typical satellite based broadcasting system with which the present invention may be used;
FIG. 2 is a diagram of a receiver according to the present invention;
FIG. 3 is a frame structure according to an embodiment of the present invention;
FIG. 4 is a diagram of a tuner/demodulator/decoder according to the present invention;
FIG. 5 is a diagram of an encoder/modulator according to the present invention;

### DESCRIPTION OF THE PREFERRED EMBODIMENT

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

Although the present invention is described in the context of a satellite-based television broadcasting system, the techniques described herein are equally applicable to other methods of program content delivery, such as terrestrial over-the-air systems, cable-based systems, and the Internet. Further, while the present invention will be described primarily with respect to television content (i.e. audio and video content), the present invention can be practiced with a wide variety of program content material, including video content, audio content, audio and video related content (e.g., television viewer channels), or data content.

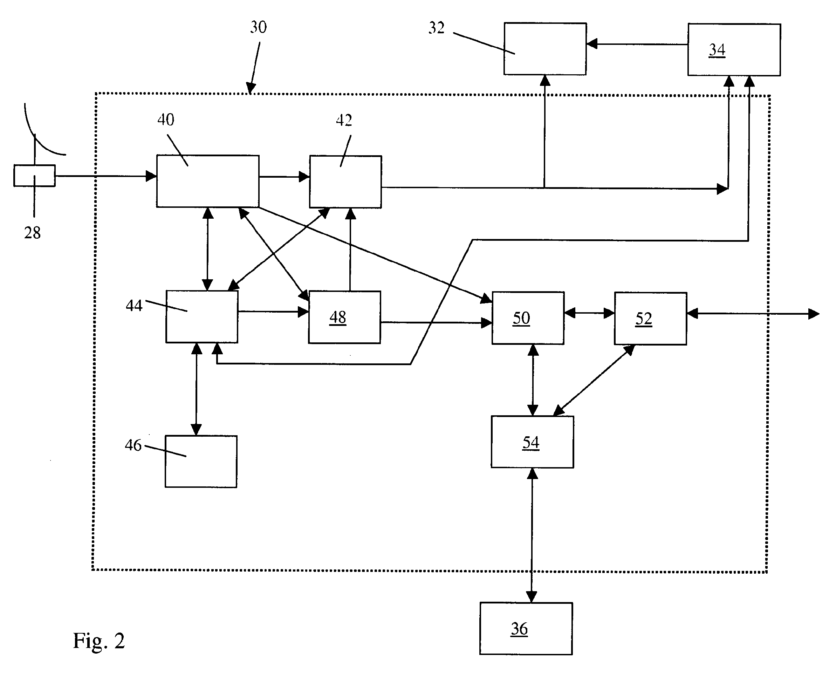

As shown in Fig. 2, an RF user terminal such as 17 includes an antenna dish 28, a receiver 30, optionally a video display unit (VDU) 32, optionally a recording device 34, and optionally an access card 36. The receiver 30 includes a tuner/demodulator/decoder 40, a digital-to-analog (D/A) converter 42, a processing engine 44 such as a CPU, a timing circuit 46, a memory 48, a logic circuit 50, an interface 52 and an access card interface 54. The receiver dish 28 receives the signals 24 according to the present invention sent by satellite(s) 16, amplifies the received signals and passes the signals onto the tuner/decoder 40. The tuner/decoder 40 operate under the control of the CPU 44.

The CPU 44 operates under control of an operating system stored in a memory. The functions performed by the CPU 44 are controlled by one or more control programs or applications stored in memory. The operating system and applications are comprised of instructions which, when read and executed by the CPU, cause the receiver 30 to perform the functions and steps necessary to implement and/or use the signals of the present invention, typically, by accessing and manipulating data stored in the memory. Instructions implementing such applications can be tangibly embodied in a computer-readable medium, such as the memory or the access card. The CPU 44 may also communicate with other devices through the interface 52 or the receiver dish 28 to accept commands or instructions to be stored in the memory, thereby making a computer program product or article of manufacture according to the invention.

The memory 48 and optionally the access card 36 store a variety of parameters for the receiver 30, such as a list of channels that the receiver terminal 17 is authorized to process. The signals sent from receiver dish to the tuner are a plurality of modulated Radio Frequency (RF) signals in accordance with the present invention. The desired RF signal is then downconverted to baseband by the tuner/decoder, which also generates in-phase and quadrature (I and Q) signals. These two signals are then passed to the demodulator. The demodulator then demodulates the I and Q signals, and an FEC decoder identifies each transmitted symbol. The symbols (corrected if necessary) are translated into data bits, which in turn are assembled in to payload data bytes, and ultimately into data packets. The data packets may carry 130 data bytes or 188 bytes (187 data bytes and 1 sync byte).

In addition to the digital satellite signals received by the receiver dish 28, other sources of television content can also be used. For example, alternate content source provides additional television content to the VDU 32. The alternate content source is coupled to the tuner 38. The alternate content source can be an antenna for receiving off the air NTSC signals, a cable for receiving ATSC signals, or other content sources.

Initially, as data enters the user receiver, the CPU looks for initialization data which is referred to commonly in the industry as a boot object. A boot object identifies the SCIDs where all other program guide objects can be found. Boot objects are always transmitted with the same SCID, so the CPU knows that it must look for packets marked with that SCID. The information from the boot object is used by the CPU to identify packets of program guide data and route them to memory.

When a user requests the display of a program guide, a guide request signal is transmitted to the logic circuit. The logic circuit informs the CPU of the guide request. In response to the guide request, the CPU causes the memory to transfer a program guide digital image to the D/A converter. The D/A converter converts the program guide digital image into a standard analog television signal, which is then transmitted to the VDU. The VDU may alternatively be a digital television, in which case no digital to analog conversion in the user receiver is necessary.

Digital data transmitted from broadcasting station 12 via RF signal 22, satellites 16, and RF signal 24 contains three main components: a header portion of a data frame, called the physical layer header, or PL header, and payload data, and optionally, additional inserted symbols, called pilot symbols. By using the PL header, a demodulator/FEC-decoder in the user terminal can quickly acquire the correct phase at the beginning of every data frame.

Fig. 3 is a diagram of an exemplary frame structure used in the system of the present invention. By way of example, an LDPC coded frame 60, which can support, for example, satellite broadcasting and interactive services, is shown. The frame 60 includes a Physical Layer Header (denoted "PL Header") 62 and occupies one slot, as well as other slots 64 for data or other payload and one or more optional pilot slots 65. The PL header is intended for receiver synchronization and physical layer signaling. The frame 60, according to one embodiment of the present invention, utilizes a PL header 62 comprising a Start Of Frame (SOF) section comprising 26 symbols (identifying the Start of Frame), and a Physical Layer Signaling Code field (PLS code) field comprising 64 symbols.

The PLHEADER (one SLOT of 90 symbols) is preferably composed of the following fields:
- SOF (26 symbols), identifying the Start of Frame.
- PLS code (64 symbol): PLS (Physical Layer Signaling) code shall be a non-systematic binary code of length. It transmits 7 bits for physical layer signaling purpose. These 7 bits consist of three fields, FRAME TAG, MODCOD and TYPE defined as follows:
   - FRAME TAG: (2 symbols) for frame tagging to select one out of four possible destination groups.
   - MODCOD (4 symbols), identifying the XFECFRAME modulation and FEC rate;
   - TYPE (1 symbols), defining the presence/absence of pilots.

After decoding the PL header, the receiver knows the destination, the modulation and coding scheme of the XFECFRAME, and the presence or absence of pilot symbols.

The above scheme differs from that defined in ETSI EN 302 307 where the seven bits constituting the PLS code, are used for only MODCOD (5 bits) and TYPE (2 bits).

The effect of doing this is that the number of possible modcodes is reduced, and the selection short/normal frame (second TYPE bit) is not available. However the present invention, does not rely on the complete set of DVB-S2 modcodes, and will work satisfactorily with normal frames only.

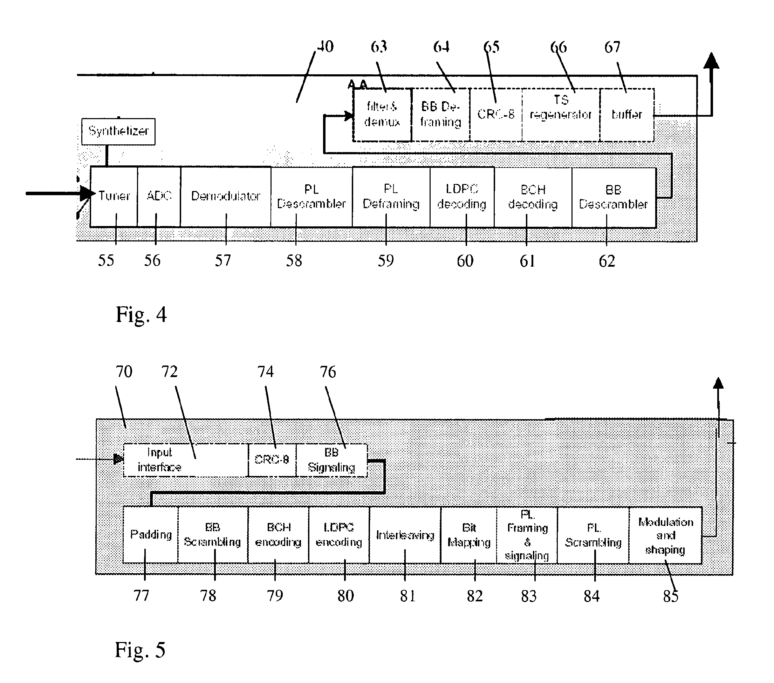

Figure 4 is a diagram of an exemplary RF tuner/demodulator/FEC decoder 40 in the system of Figure 1. The tuner/demodulator/decoder 40 can then look for a specific SOF according to the present invention when asked to tune to one or the other of the data frames, and be able to tell the difference between them and the destination group of these frames. If the present receiver does not belong to the specified group, then this information is not decoded.

The tuner/demodulator/FEC decoder 40 can comprise a tuner 55, an analog to digital converter 56, a demodulator 57, a PL header descrambler 58 , a PL header deframer 59, an LDPC decoder 60, a BCH decoder 61, a base band descrambler 62, a filter and demultiplexer 63, a base band deframer 64, an error correction unit 65, a time slot regenerator 66 and a buffer 67 and supports reception of signals from a satellite 16 via antenna 28. According to one embodiment of the present invention, tuner/demodulator/FEC decoder 40 provides filtering, symbol timing synchronization and frequency and phase acquisition and tracking and descrambling of the encoded signals received from antenna 28. The PL deframer 59 reads the PL code to determine the destination group. If the destination group determined from the PL code is appropriate for the receiver, the signals may pass forward for decoding. Otherwise they are discarded. After demodulation, the signals are forwarded to a LDPC decoder 60, BCH decoder 61, and further don the receive chain.

Fig. 5 is a diagram of an exemplary RF encoder/modulator 70 employed in the digital transmission facility of the system according to the present invention. The encoder/modulator 70 has an input interface 72 for receiving signals from an information source, an error correction coding unit 74 for providing error correction codes to the signals, a base band signalling unit 76, an optional padding unit 77, a base band scrambling unit 78, a BCH encoder 79, an LDPC encoder 80, an interleaver 81, a bit mapper 82, a PL header framing and signalling unit 83, a PL header scrambling unit 84. a modulating and shaping unit 85. The modulating and shaping unit 85, maps the scrambled messages to signal waveforms that are to be transmitted to the transmit antenna 14. which emits these waveforms over the communication channel 22. The transmitted signals from the antenna 14 are relayed via a satellite 16 to the receiver terminals 17, 18.

The encoder/modulator 70 generates signals in accordance with the present invention. In particular the PL header framing and signalling unit 83 constructs the SOF as described above. i.e. constructs frames 60 including a Physical Layer Header (denoted "PL Header") 62. as well as the other slots 64 for data or other payload. The frame 60 is generated with a PL header 62 comprising a Start Of Frame (SOF) section comprising 26 symbols (identifying the Start of Frame), and a Physical Layer Signaling Code field (PLS code) field comprising 64 symbols.

The PLHEADER (one SLOT of 90 symbols) is preferably composed of the following fields:
- SOF (26 symbols), identifying the Start of Frame.
- PLS code (64 symbol): PLS (Physical Layer Signaling) code shall be a non-systematic binary code of length. It transmits 7 bits for physical layer signaling purpose. These 7 bits consist of three fields, FRAME TAG, MODCOD and TYPE defined as follows:
   - FRAME TAG: (2 symbols) for frame tagging to select one out of four possible destination groups.

- MODCOD (4 symbols), identifying the XFECFRAME modulation and FEC rate;
- TYPE (1 symbols), defining the presence/absence of pilots.

Methods of the present can be carried out using software, e.g. using a microprocessor that can be an embedded microprocessor, or in hardware (e.g. using an FPGA or ASIC). For example, the encoder/modulator 70 can include a processing engine such as a CPU and a memory. The encoder/modulator 70 operates under the control of the CPU. The CPU operates under control of an operating system stored in a memory. The functions performed by the CPU are controlled by one or more control programs or applications stored in memory. The operating system and applications are comprised of instructions which, when read and executed by the CPU, cause the encoder/modulator 70 to perform the functions and steps necessary to generate the signals of the present invention. Instructions implementing such applications can be tangibly embodied in a computer-readable medium, such as the memory or an optical disk such as a CD-ROM or DVD-ROM.

Accordingly, the present invention also includes a software or computer program product comprising code segments that when executed on a suitable processing engine implement a method of transmitting signals in a satellite telecommunications system, , the code segments implementing when executed:
generating a signal comprising a header and a payload portion, the header comprising:
   a frame tag field for frame tagging to define one of a plurality of destination groups, and
   a modcode field for defining one of a plurality of modulation codes.

The present invention also includes software for a receiver. Accordingly, the present invention also includes a software or computer program product comprising code segments that when executed on a suitable processing engine implement a method of receivingsignals in a satellite telecommunications system, the code segments implementing when executed:
receiving a signal comprising a header and a payload portion, the header comprising:
   a frame tag field for frame tagging to define one of a plurality of destination groups, and
   a modcode field for defining one of a plurality of modulation codes, and only decoding the signal dependent upon the determined destination group.

## Claims

1. A method of transmitting signals in a satellite telecommunications system,
comprising:
generating a signal comprising a header (62) and a payload portion (64), the header comprising:
a frame tag field for frame tagging to define one of a plurality of destination groups, and
a modcode field for defining one of a plurality of modulation codes, and transmitting the signal from a ground antenna (14, 28) to a satellite (16).

2. The method according to claim 1, wherein the header also includes a type field for defining whether pilot signals are used or not.

3. The method according to claim 2, wherein the frame tag field has 1 bit for defining 2 destination groups, 2 bits for 4 destination groups, 3 bits for 8 destination groups or more bits.

4. The method according to any of the previous claims wherein the modcode field defines the modulation and forward error correction rate.

5. A receiving apparatus for use in a satellite telecommunications system comprising a receiver (30) having a demodulator (57) and a decoder (60, 61), the receiver (30) being adapted to receive a signal, the receiver (30) being adapted to read a header of the signal and to identify:
a frame tag field for frame tagging to define one of a plurality of destination groups, and
a modcode field for defining one of a plurality of modulation codes, the receiver being further adapted to only decode the signal dependent upon the determined destination group.

6. The receiving apparatus according to claim 5, wherein the receiver (30) is also adapted to identify a type field for defining whether pilot signals are used or not.

7. The receiving apparatus according to claim 6, wherein the frame tag field has 1 bit for defining 2 destination groups, 2 bits for 4 destination groups, 3 bits for 8 destination groups or more bits.

8. The receiving apparatus according to any of the claims 5 to 7 wherein the modcode field defines the modulation and forward error correction rate.

9. An encoding apparatus for use in a satellite telecommunications system having an input (72) for source signals, an encoder (79, 80) and a modulator (85), the encoding apparatus being adapted to generate a header of a transmit signal having:
a frame tag field for frame tagging to define one of a plurality of destination groups, and
a modcode field for defining one of a plurality of modulation codes, the transmit signal being supplied to the modulator for modulation before transmission.

10. The encoding apparatus according to claim 9, being adapted to generate a header of a transmit signal also having a type field for defining whether pilot signals are used or not.

11. The encoding apparatus according to claim 10, wherein the frame tag field has 1 bit for defining 2 destination groups, 2 bits for 4 destination groups, 3 bits for 8 destination groups or more bits.

12. The encoding apparatus according to any of the claims 9 to 11 wherein the modcode field defines the modulation and forward error correction rate.

13. A computer program product comprising code segments that when executed on a suitable processing engine implement a method of transmitting signals in a satellite telecommunications system, the code segments implementing when executed:
generating a signal comprising a header and a payload portion, the header comprising:
a frame tag field for frame tagging to define one of a plurality of destination groups, and
a modcode field for defining one of a plurality of modulation codes.

14. A computer program product comprising code segments that when executed on a suitable processing engine implement a method of receiving signals in a satellite telecommunications system, the code segments implementing when executed:
receiving a signal comprising a header and a payload portion, the header comprising:
a frame tag field for frame tagging to define one of a plurality of destination groups, and
a modcode field for defining one of a plurality of modulation codes; and only decoding the signal dependent upon the determined destination group.

## Patentansprüche

1. Verfahren zum Übermitteln von Signalen in einem Satellitentelekommunikationssystem, umfassend:
Erzeugen eines Signals, das eine Anfangsetikette (62) und einen Nutzlastteil (64) umfasst, wobei die Anfangsetikette umfasst:
ein Frame-Tag-Feld zum Frame-Tagging, um eine aus mehreren Zielortgruppen zu definieren, und ein Modcode-Feld zum Definieren eines von mehreren Modulationscodes, und Übermitteln des Signals von einer Bodenantenne (14, 28) zu einem Satelliten (16).

2. Verfahren nach Anspruch 1, wobei die Anfangsetikette auch ein Typfeld zur Definition enthält, ob Pilotsignale verwendet werden oder nicht.

3. Verfahren nach Anspruch 2, wobei das Frame-Tag-Feld 1 Bit zum Definieren von 2 Zielortgruppen, 2 Bits für 4 Zielortgruppen und 3 Bits für 8 Zielortgruppen oder mehr Bits aufweist.

4. Verfahren nach einem der vorangehenden Ansprüche, wobei das Modcode-Feld die Modulations- und Vorwärtsfehlerkorrekturrate definiert.

5. Empfangsvorrichtung zur Verwendung in einem Satellitentelekommunikationssystem, umfassend einen Empfänger (30) mit einem Demodulator (57) und einem Dekodierer (60, 61), wobei der Empfänger (30) dazu ausgebildet ist, ein Signal zu empfangen, wobei der Empfänger (30) dazu ausgebildet ist, eine Anfangsetikette des Signals zu lesen und zu identifizieren; ein Frame-Tag-Feld zum Frame-Tagging, um eine aus mehreren Zielortgruppen zu definieren, und ein Modcode-Feld zum Definieren eines von mehreren Modulationscodes, wobei der Empfänger ferner dazu ausgebildet ist, nur das Signal abhängig von der bestimmten Zielortgruppe zu dekodieren.

6. Empfangsvorrichtung nach Anspruch 5, wobei der Empfänger (30) auch dazu ausgebildet ist, ein Typfeld zur Definition, ob Pilotsignale verwendet werden oder nicht, zu identifizieren.

7. Empfangsvorrichtung nach Anspruch 6, wobei das Frame-Tag-Feld 1 Bit zum Definieren von 2 Zielortgruppen, 2 Bits für 4 Zielortgruppen und 3 Bits für 8 Zielortgruppen oder mehr Bits aufweist.

8. Empfangsvorrichtung nach einem der Ansprüche 5 bis 7, wobei das Modcode-Feld die Modulations- und Vorwärtsfehlerkorrekturrate definiert.

9. Kodiervorrichtung zur Verwendung in einem Satellitentelekommunikationssystem mit einem Eingang (72) für Quellensignale, einem Kodierer (79, 80) und einem Modulator (85), wobei die Kodiervorrichtung dazu ausgebildet ist, eine Anfangetikette eines Übermittlungssignals zu erzeugen mit:
einem Frame-Tag-Feld zum Frame-Tagging, um eine aus mehreren Zielortgruppen zu definieren, und ein Modcode-Feld zum Definieren eines von mehreren Modulationscodes, wobei das Übermittlungssignal dem Modulator zur Modulation vor der Übermittlung zugeleitet wird.

10. Kodiervorrichtung nach Anspruch 9, die zum Erzeugen einer Anfangsetikette eines Übermittlungssignals ausgebildet ist, die auch ein Typfeld zur Definition, ob Pilotsignale verwendet werden oder nicht, aufweist.

11. Kodiervorrichtung nach Anspruch 10, wobei das Frame-Tag-Feld 1 Bit zum Definieren von 2 Zielortgruppen, 2 Bits für 4 Zielortgruppen und 3 Bits für 8 Zielortgruppen oder mehr Bits aufweist.

12. Kodiervorrichtung nach einem der Ansprüche 9 bis 11, wobei das Modcode-Feld die Modulations- und Vorwärtsfehlerkorrekturrate definiert.

13. Computerprogrammprodukt, das Codesegmente umfasst, die, wenn sie auf einer geeigneten Verarbeitungsmaschine ausgeführt werden, ein Verfahren zum Übermitteln von Signalen in einem Satellitentelekommunikationssystem ausführen, wobei die Codesegmente bei der Ausführung Folgendes implementieren:
Erzeugen eines Signals, das eine Anfangsetikette und einen Nutzlastteil umfasst, wobei die Anfangsetikette umfasst:
ein Frame-Tag-Feld zum Frame-Tagging, um eine aus mehreren Zielortgruppen zu definieren, und ein Modcode-Feld zum Definieren eines von mehreren Modulationscodes.

14. Computerprogrammprodukt, das Codesegmente umfasst, die, wenn sie auf einer geeigneten Verarbeitungsmaschine ausgeführt werden, ein Verfahren zum Empfangen von Signalen in einem Satellitentelekommunikationssystem ausführen, wobei die Codesegmente bei der Ausführung Folgendes implementieren:
Empfangen eines Signals, das eine Anfangsetikette und einen Nutzlastteil umfasst, wobei die Anfangsetikette umfasst:
ein Frame-Tag-Feld zum Frame-Tagging, um eine aus mehreren Zielortgruppen zu definieren, und ein Modcode-Feld zum Definieren eines von mehreren Modulationscodes, und nur Dekodieren des Signals abhängig von der bestimmten Zielortgruppe.

## Revendications

1. Procédé de transmission de signaux dans un système de télécommunications par satellite, comprenant :
la production d'un signal comprenant un en-tête (62) et une partie formant charge utile (64), l'en-tête comprenant :
un champ d'étiquette de trame pour le marquage de trame pour définir un groupe d'une pluralité de groupes de destination, et
un champ de code de modulation pour définir un code d'une pluralité de codes de modulation, et la transmission du signal depuis une antenne terrestre (14. 28) à destination d'un satellite (16).

2. Procédé selon la revendication 1, dans lequel l'en-tête inclut également un champ de type pour définir si des signaux pilotes sent ou non utilisés.

3. Procédé selon la revendication 2, dans lequel le champ d'étiquette de trame a 1 bit pour définir 2 groupes de destination, 2 bits pour 4 groupes de destination, 3 bits pour 8 groupes de destination ou plus de bits.

4. Procédé selon l'une quelconque des revendications précédentes dans lequel le champ de code de modulation définit le taux de correction d'erreurs sans voie de retour et la modulation.

5. Appareil de réception à utiliser dans un système de télécommunications par satellite comprenant un récepteur (30) ayant un démodulateur (57) et un décodeur (60, 61), le récepteur (30) étant conçu pour recevoir un signal, le récepteur (30) étant conçu pour lire un en-tête du signal et pour l'identification ;
un champ d'étiquette de trame pour le marquage de trame pour définir un groupe d'une pluralité de groupes de destination, et un champ de code de modulation pour définir un code d'une pluralité de codes de modulation, le récepteur étant en outre conçu pour décoder seulement le signal en fonction du groupe de destination déterminé.

6. Appareil de réception selon la revendication 5, dans lequel le récepteur (30) est également conçu pour identifier un champ de type pour définir si des signaux pilotes sont ou non utilisés.

7. Appareil de réception selon la revendication 6, dans lequel le champ d'étiquette de trame a 1 bit pour définir 2 groupes de destination, 2 bits pour 4 groupes de destination, 3 bits pour 8 groupes de destination ou plus de bits.

8. Appareil de réception selon l'une quelconque des revendications 5 à 7, dans lequel le champ de code de modulation définit le taux de correction d'erreurs sans voie de retour et la modulation.

9. Appareil de codage pour utilisation dans un système de télécommunications par satellite ayant une entrée (72) pour des signaux de source, un codeur (79, 80) et un modulateur (85), l'appareil de codage étant conçu pour produire un en-tête d'un signal de transmission ayant :
un champ d'étiquette de trame pour le marquage de trame pour définir un groupe d'une pluralité de groupes de destination et un champ de code de modulation pour définir un code d'une pluralité de codes de modulation, le signal de transmission étant fourni au modulateur pour la modulation avant la transmission.

10. Appareil de codage selon la revendication 9, conçu pour produire un en-tête d'un signal de transmission ayant également un champ de type pour définir si des signaux pilotes sont ou non utilisés.

11. Appareil de codage selon la revendication 10, dans lequel le champ d'étiquette de trame a 1 bit pour définir 2 groupes de destination, 2 bits pour 4 groupes de destination, 3 bits pour 8 groupes de destination ou plus de bits.

12. Appareil de codage selon l'une quelconque des revendications 9 à 11, dans lequel le champ de code de modulation définit le taux de correction d'erreurs sans voie de retour et la modulation.

13. Produit formant programme informatique comprenant des segments de code qui, lorsqu'ils sont exécutés sur un moteur de traitement approprié, mettent en oeuvre un procédé de transmission de signaux dans un système de télécommunications par satellite, les segments de code mettant en oeuvre lorsqu'ils sont exécutés :
la production d'un signal comprenant un en-tête et une partie formant charge utile, l'en-tête comprenant :
un champ d'étiquette de trame pour le marquage de trame pour définir un groupe d'une pluralité de groupes de destination, et un champ de code de modulation pour définir un code d'une pluralité de codes de modulation.

14. Produit formant programme informatique comprenant des segments de code qui, lorsqu'ils sont exécutés sur un moteur de traitement approprié, mettent en oeuvre un procédé de réception de signaux dans un système de télécommunications par satellite, les segments de code mettant en oeuvre lorsqu'ils sont exécutés :
la réception d'un signal comprenant un en-tête et une partie formant charge utile, l'en-tête comprenant :
un champ d'étiquette de trame pour le marquage de trame pour définir un groupe d'une pluralité de groupes de destination, et un champ de code de modulation pour définir un code d'une pluralité de codes ce modulation, et seulement le décodage du signal en fonction du groupe de destination déterminé.
